(19) Europäisches Patentamt
European Patent Office
Office européen des brevets

(11) **EP 4 344 237 A1**

(12) **EUROPEAN PATENT APPLICATION**

(43) Date of publication:
**27.03.2024  Bulletin 2024/13**

(21) Application number: **22196875.3**

(22) Date of filing: **21.09.2022**

(51) International Patent Classification (IPC):
*H04N 21/81* (2011.01)    *H04N 21/218* (2011.01)
*H04N 13/271* (2018.01)    *H04N 5/222* (2006.01)
*H04N 23/90* (2023.01)    *H04N 23/95* (2023.01)
*G06T 7/50* (2017.01)    *H04N 19/597* (2014.01)

(52) Cooperative Patent Classification (CPC):
**H04N 21/816; G06T 7/50; H04N 13/271;**
**H04N 21/21805; H04N 23/959**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventor: **VAREKAMP, Christiaan**
**5656 AG Eindhoven (NL)**

(74) Representative: **Philips Intellectual Property &**
**Standards**
**High Tech Campus 52**
**5656 AG Eindhoven (NL)**

(54) **GENERATION OF DEPTH MAPS FOR IMAGES**

(57)    An apparatus generates a depth map for an image a capture position for the image, and depth maps from at least two depth sense positions. Some depth map pixels are designated as uncertain. A view shift processor (305) applies view shifts to the depth maps from the depth sense positions to the capture position and designates pixels of the view shifted depth maps as uncertain if no certain pixel shifts to the pixel position. A combiner (307) generates a combined depth map for the capture position by combining the view shifted depth maps and designates pixels of the combined depth map as uncertain depth pixels if any pixel used in the combining is designated as an uncertain pixel. A depth map generator (309) generates an output depth map by determining depth values for uncertain pixels based on image values or certain pixels of the combined depth map.

**FIG. 2**

EP 4 344 237 A1

**Description**

FIELD OF THE INVENTION

The invention relates to generation of depth maps and in particular, but not exclusively, to generation of depth maps supporting view synthesis/ shifting based on images captured of a scene.

BACKGROUND OF THE INVENTION

The variety and range of image and video applications have increased substantially in recent years with new services and ways of utilizing and consuming video being continuously developed and introduced.

For example, one service being increasingly popular is the provision of image sequences in such a way that the viewer is able to actively and dynamically interact with the system to change parameters of the rendering. A very appealing feature in many applications is the ability to change the effective viewing position and viewing direction of the viewer, such as for example allowing the viewer to move and look around in the scene being presented.

An example of a video service or application that has been proposed is immersive video where video is played-back on e.g. a VR headset to provide a three-dimensional experience. For immersive video, the viewer has freedom to look and move around in the presented scene such that this may be perceived as being viewed from different viewpoints. However, in many typical approaches, the amount of movement is limited, e.g. to a relatively small area around a nominal viewpoint which may typically correspond to a viewpoint from which the video capture of the scene has been performed. In such applications, three dimensional scene information is often provided that allows high quality view image synthesis for viewpoints that are relatively close to the reference viewpoint(s) but which deteriorates if the viewpoint deviates too much from the reference viewpoints.

Immersive video may also often be referred to as 6-degrees-of-freedom (6DoF) or 3DoF+ video. MPEG Immersive Video (MIV) is an emerging standard where meta-data is used on top of existing video codecs to enable and standardize immersive video.

In many applications, the capture of a real world scene is based on a plurality of spatially differentiated cameras, such as cameras arranged in a line. This provides images of the scene from different view positions. Further, the captured images may be provided together with depth maps that provide information on the distance from the camera to the objects of the scene being captured. For example, immersive video data may be provided in the form of a multi-view possibly accompanied with depth data (MVD) representation of the scene.

In some applications, the depth information may be estimated based on information in the captured image, e.g. by estimating parallax values for corresponding objects in the different images. However, as such estimations tend to be suboptimal and may result in inaccuracies and errors, many capture systems include dedicated depth sensors that can capture distances to objects. For example, depth sensors based on indirect Time of Flight (iToF) have become popular and a number of cameras combining an optical sensor and a depth sensor have been developed. In many capture systems, a number of such cameras may be used to provide a set of images and depths for different view poses.

However, whereas the inclusion of one or more depth sensors to a capture arrangement tends to add robustness and more reliable depth information, depth sensors may also suffer from errors or inaccuracies. Most notably, accurate depth measurement near a depth transition (step) tends to be difficult due to ambiguous/mixed signals being received by the depth sensor. It should be noted that a similar problem is known in stereo or multi view depth estimation based on image matching (correlation) since pixels cannot be matched due to occlusion.

Another issue is that due to practical implementation constraints, the depth sensor and optical sensor will generally be physically offset relative to each other. As such the measured depth information will be for a pose that is offset relative to the captured image and thus the image and depth maps will not fully align. This may result in errors and inaccuracies when e.g. performing view shifting and rendering based on the depth maps.

Hence, an improved approach would be advantageous. In particular, an approach that allows improved operation, increased flexibility, reduced complexity, facilitated implementation, increased synthesized image quality, improved rendering, improved depth information, improved consistency between depth maps and linked images, improved and/or facilitated view synthesis for different view poses, reduced data requirements, and/or improved performance and/or operation would be advantageous.

SUMMARY OF THE INVENTION

Accordingly, the Invention seeks to preferably mitigate, alleviate or eliminate one or more of the above-mentioned disadvantages singly or in any combination.

According to an aspect of the invention there is provided an apparatus for generating a depth map for an image representing a view of a scene, the apparatus comprising: a position receiver arranged to receive a capture position for the image, the capture position being a position of a capture of the image; a depth receiver arranged to receive a first depth map providing depth values from a first position and a second depth map providing depth values from a second position, the first depth map including at least some pixels designated as uncertain depth pixels and the second depth map including at least some pixels designated as uncertain depth pixels; a view shift processor arranged to perform a first view shift of the first depth map from the first position to the capture position to generate a first view shifted depth map, and to perform a second view shift of the second depth map from the second position to the capture position to generate a second view shifted depth map, the view shift processor further being arranged to designate as uncertain: pixels of the first view shifted depth map to which no depth values for pixels not designated as uncertain pixels in the first depth map are projected by the first view shifting, and pixels of the second view shifted depth map to which no depth values for pixels not designated as uncertain pixels in the second depth map are projected by the second view shifting; a combiner arranged to generate a combined depth map for the capture position by combining depth values of same position pixels of the first view shifted depth map and of the second view shifted depth map, the combiner being arranged to designate pixels of the combined depth map as uncertain depth pixels if any same position pixel is designated as an uncertain pixel; and a depth map generator arranged to generate an output depth map for the capture position by determining depth values of the combined depth map designated for pixels designated as uncertain pixels using at least one of image values of the image and depth values of pixels of the combined depth map that are not designated as uncertain.

The approach may allow an improved depth map to be generated for an image based on depth maps from depth sensors at other positions. The approach may allow improved image synthesis for different view poses. In many embodiments, depth data allowing efficient and high quality view shifting and synthesis may be generated.

The term pose or placement is in the field generally used to refer to a position and/or orientation.

The approach may allow efficient combination of depth information from different depth sensors and depth maps. The approach may in particular in many scenarios prevent artifacts, errors, and inaccuracies resulting from using wrong or inaccurate depth values. It may provide improved consistency in many scenarios.

The approach may allow efficient and facilitated implementation and may in many scenarios provide reduced computational resource usage and complexity.

Positions may be scene positions. Positions may be with reference to a scene coordinate system. A same position of pixels in different depth maps (representing depth from the same position) are pixels that represent the same view direction from the given position.

An uncertain pixel may in many cases be referred to as an unknown, unreliable, invalid, and/or non-confident pixel.

In many embodiments, the apparatus may comprise a view synthesizer arranged to generate a view image for a view pose having a position different from the capture position from the image and the output depth map.

According to an optional feature of the invention, there is provided an angle between a direction from the capture position to the first position and a direction from the capture position to the second position is no less than 90°.

This may provide particularly advantageous operation and/or implementation in many embodiments. In many embodiments, the angle may be no less than 100°, 120°, 140°, or 160°.

In some embodiments, an angle between a line connecting the capture position to the first position and a line connecting the capture position to the second position is no less than 90° 100°, 120°, 140°, 160°.

In some embodiments, an angle between a line through the capture position and the first position, and a line through the capture position and the second position is no less than 90° 100°, 120°, 140°, 160°.

According to an optional feature of the invention, the first position, the second position, and the capture position are arranged in a linear configuration with the capture position being between the first position and the second position.

This may provide particularly advantageous operation and/or implementation in many embodiments.

According to an optional feature of the invention, the first position, the second position, and the capture position are arranged such that a direction of movement of pixels at a same depth is in opposite directions for the first view shift and the second view shift.

This may provide particularly advantageous operation and/or implementation in many embodiments.

In some embodiments, the first position, the second position, and the capture position are arranged such that a direction of movement of image coordinates for a given depth is in opposite directions for the first view shifting and the second view shifting.

According to an optional feature of the invention, the combiner is arranged to determine a depth value of the combined depth map for a given pixel as a weighted combination of a first depth value for a pixel in the first view shifted map not designated as an uncertain depth pixel and having a same position as the given pixel, and a second depth value in the second view shifted not designated as an uncertain depth pixel and map having a same position as the given pixel.

This may provide particularly advantageous operation and/or implementation in many embodiments. It may typically provide suppression of depth noise or errors.

In some embodiments, the combiner may be arranged to determine a depth value of the combined depth map for a given view direction as a weighted combination of a first depth value for the given view direction in the first view shifted map and a second depth value for the given view direction in the second view shifted map if the first depth value is for a pixel in the first depth map not designated as an uncertain depth pixel and the second depth value is for a pixel in the second depth map not designated as an uncertain depth pixel.

According to an optional feature of the invention, the depth map generator is arranged to generate depth values for pixels designated as uncertain in the combined depth map by estimation from depth values for pixels not designated as uncertain in the combined depth map.

This may provide particularly advantageous operation and/or implementation in many embodiments.

According to an aspect of the invention there is provided an image capture system capture system comprising the apparatus previously described and further comprising: a first image camera at the capture position arranged to provide the image to the image receiver; a first depth sensor at the first position arranged to provide depth data for the first depth map to the depth receiver; and a second depth sensor at the second position arranged to provide depth data for the second depth map to the depth receiver.

The approach may provide an image capture system that may generate particularly accurate and/or reliable 3D information including both image and depth information.

According to an optional feature of the invention, the capture system further comprises at least one further image camera at a further capture position, an angle between a direction from the further capture position to the first position and a direction from the further capture position to the second position being no less than 90°.

This may provide particularly advantageous operation and/or implementation in many embodiments.

The approach described with reference to the first camera may also be applied to each of the at least one further image cameras.

In many embodiments, the angle may be no less than 100°, 120°, 140°, or 160°.

According to an optional feature of the invention, the capture system further comprises a plurality of image cameras including the first image camera, and a plurality of depth sensors including the first depth sensor and the second depth sensor arranged in a configuration such that for all image cameras of the plurality of image cameras two depth sensors of the plurality of depth sensors are arranged such that an angle between directions from a position of the image camera to the two depth sensors is no less than 120°.This may provide particularly advantageous operation and/or implementation in many embodiments. In many embodiments, the angle may be no less than 140°, or 160°.

According to an optional feature of the invention, the plurality of image cameras and the plurality of depth sensors are arranged in a linear configuration.

This may provide particularly advantageous operation and/or implementation in many embodiments.

According to an optional feature of the invention, at least one depth sensor of the plurality of depth sensors is located between each pair of adjacent image cameras of the plurality of image cameras.

This may provide particularly advantageous operation and/or implementation in many embodiments.

According to an optional feature of the invention, the plurality of image cameras and the plurality of depth sensors are arranged in a two-dimensional configuration.

This may provide particularly advantageous operation and/or implementation in many embodiments.

According to an optional feature of the invention, a number of depth sensors of the plurality of depth sensors exceeds a number of image cameras of the plurality of image cameras.

This may provide particularly advantageous operation and/or implementation in many embodiments.

According to an optional feature of the invention, a number of image cameras of the plurality of image cameras exceeds a number of depth sensors of the plurality of depth sensors.

This may provide particularly advantageous operation and/or implementation in many embodiments.

According to an aspect of the invention there is provided a method of generating a depth map for an image representing a view of a scene, the method comprising: receiving a capture position for the image, the capture position being a position of a capture of the image; receiving a first depth map providing depth values from a first position and a second depth map providing depth values from a second position, the first depth map including at least some pixels designated as uncertain depth pixels and the second depth map including at least some pixels designated as uncertain depth pixels; performing a first view shift of the first depth map from the first position to the capture position to generate a first view shifted depth map, performing a second view shift of the second depth map from the second position to the capture position to generate a second view shifted depth map, designating as uncertain: pixels of the first view shifted depth map to which no depth values for pixels not designated as uncertain pixels in the first depth map are projected by the first view shifting, and pixels of the second view shifted depth map to which no depth values for pixels not designated as uncertain pixels in the second depth map are projected by the second view shifting; generating a combined depth map for the capture position by combining depth values of same position pixels of the first view shifted depth map and of the second view shifted depth map, the combiner being arranged to designate pixels of the combined depth map as uncertain depth pixels if any same position pixel is designated as an uncertain pixel; and generating an output depth map for the capture position by determining depth values of the combined depth map designated as uncertain depth values using at least one of image values of the image and depth values not designated as uncertain.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of elements of an image distribution system;
FIG. 2 illustrates an example of an image capture scenario;
FIG. 3 illustrates an example of elements of an apparatus in accordance with some embodiments of the invention;
FIG. 4 illustrates an example of a scene capture scenario;
FIG. 5 illustrates an example of a scene capture scenario;
FIG. 6 illustrates an example of depth maps for a scene capture scenario;
FIG. 7 illustrates an example of processing of depth maps for a scene capture scenario;
FIG. 8 illustrates an example of elements of a depth and image capture scenario;
FIG. 9 illustrates an example of elements of a depth and image capture scenario;
FIG. 10 illustrates an example of elements of a depth and image capture scenario;
FIG. 11 illustrates an example of elements of a depth and image capture scenario;
FIG. 12 illustrates an example of elements of a depth and image capture scenario; and
FIG. 13 illustrates some elements of a possible arrangement of a processor for implementing elements of an apparatus in accordance with some embodiments of the invention.

DETAILED DESCRIPTION OF THE EMBODIMENTS

Three dimensional image and video capture, distribution, and presentation is becoming increasingly popular and desirable in some applications and services. A particular approach is known as immersive video and typically includes the provision of views of a real-world scene, and often a real time event, that allow small viewer movements, such as relatively small head movements and rotations. For example, real-time video broadcast of e.g., a sports event that allows local client-based generation of views following small head movements of a viewer may provide the impression of a user being seated in the stands watching the sports event. The user can e.g., look around and will have a natural experience similar to the experience of a spectator being present at that position in the stand. Recently, there has been an increasing prevalence of display devices with positional tracking and 3D interaction supporting applications based on 3D capturing of real-world scenes. Such display devices are highly suitable for immersive video applications providing an enhanced three dimensional user experience.

The following description will focus on an immersive video application, but it will be appreciated that the described principles and concepts may be used in many other applications and embodiments, including embodiments where single images are captured.

In many approaches, the immersive video may be provided locally to a viewer by e.g. a stand-alone device that does not use, or even have any access to, any remote video server. However, in other applications, an immersive application may be based on data received from a remote or central server. For example, video data may be provided to a video rendering device from a remote central server and may be locally processed to generate a desired immersive video experience.

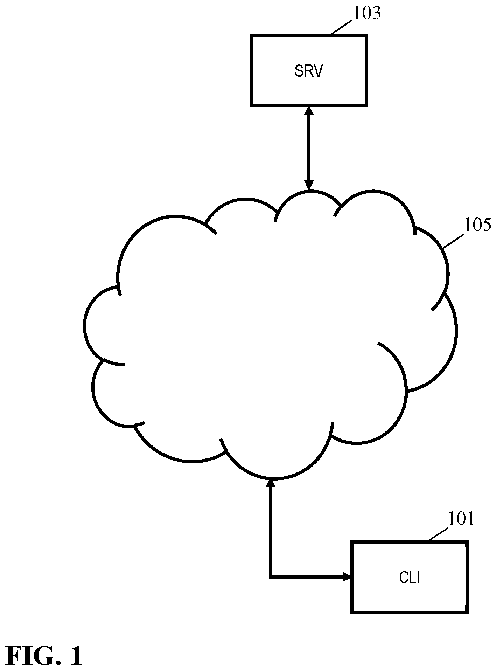

FIG. 1 illustrates such an example of an immersive video system in which a video rendering client 101 liaises with a remote immersive video server 103 e.g. via a network 105, such as the Internet. The server 103 may be arranged to simultaneously support a potentially large number of client devices 101.

The server 103 may for example support an immersive video experience by transmitting three dimensional video data describing a real world scene. The data may specifically describe visual features and geometric properties of the scene which is generated from a real time capture of the real world by a set of (possibly 3D) cameras.

In order to provide such services for a real-world scene, the scene is typically captured from different positions and with different camera capture poses being used. As a result, the relevance and importance of multi-camera capturing and e.g. 6DoF (6 Degrees of Freedom) processing is quickly increasing. Applications include live concerts, live sports, and telepresence. The freedom of selecting one's own viewpoint enriches these applications by increasing the feeling of presence over regular video. Furthermore, immersive scenarios can be conceived where an observer may navigate and interact with a live captured scene. For broadcast applications this may require real-time view synthesis at the client device. View synthesis introduces errors and these errors depend on the implementation details of algorithms.

In order to provide a suitable representation of a scene, the captured images/ videos are typically provided together with depth maps that indicate the depth of/ distance to the objects represented by the pixels of the image. In many embodiments, a depth map linked to an image may include one depth value and depth pixel for each pixel of the image, and thus the depth map(s) and image(s) may have the same resolution. In other embodiments, the depth maps may have a lower resolution and the depth maps may provide some depth values that are common for a plurality of image pixels.

In some capture systems, depth maps may be estimated and derived from the captured images. However, improved depth information is typically achievable by using dedicated depth sensors. For example, depth sensors have been developed that transmit a signal and estimate the time delay for an echo to arrive from different directions. The depth map may then be generated with depth values reflecting this measured time of flight in different directions. 3D cameras have been developed which include both an optical camera and one or more depth sensors. Multiple such cameras are often used together in a suitable capture configuration. For example, a plurality of 3D cameras may be arranged in a line to provide an MVD representation of images for different capture poses together with associated depth cameras.

However, whereas such approaches may provide excellent results in many scenarios, it does not perform optimally in all situations. In particular, in some cases, it may be difficult for the depth sensors to accurately determine the time of flight and thus the distance to the object. In general, depth estimation is often difficult or inaccurate around depth transitions such as at the edge of objects.

It has been found that in many applications, it is advantageous to process depth values that are not considered to be sufficiently reliable differently from depth values that are considered reliable. Accordingly, in many capture systems, the generated depth maps may be provided together with data that indicates whether the pixels/ depth values are considered as uncertain or certain pixels. For example, a binary map may be provided which for each pixel and depth value of the depth map indicates whether the corresponding pixel of the depth map is an uncertain depth pixel or not, i.e. whether the depth value provided by the depth map for that pixel is designated as an uncertain pixel or not.

It will be appreciated that any suitable approach or algorithm for determining which depth and depth pixels (pixels of the depth map) are designated as uncertain pixels and which are not designated as uncertain pixels may be used, and that different approaches may be used in different embodiments. Typically, the depth sensors may comprise built in functionality that generates a reliability estimate or confidence level for each depth value and the corresponding pixels may be designated as uncertain if the reliability estimate or confidence level indicate a reliability below a given threshold. For example, if an echo in a given direction is extended over a relatively long time interval or e.g. if more than one significant peak is detected, the reliability may by the depth sensor be considered low and the pixel may be designated as any uncertain pixel.

It will be appreciated that an uncertain pixel may correspond to an unreliable/ non-confident pixel or an unknown depth pixel and that the term may in many embodiments be replaced by any such term. A depth pixel or value that is not designated as an uncertain/ unreliable/ unknown depth pixel may be referred to as a certain/ reliable/ known depth.

The output from the depth sensor may accordingly be a depth map that includes a number of pixels that are considered as uncertain, and specifically unknown, depth values and pixels. The processing of such depth maps may include addressing such pixels and generating depth values for the uncertain and unknown pixels using other means. For example, depth values for uncertain pixels may be determined by parallax estimation between different corresponding pixels in different images for different views. Alternatively or additionally, depth values for uncertain depth pixels may be determined by extrapolation of depth pixels that are considered to be certain or known depth pixels.

Another issue for many capture arrangements is that the depth sensors are not fully colocated with the optical camera sensors, i.e. the depth data of the depth map are provided for a different position than the capture position of the image, i.e. the depth data is for a different position than that of the image. Although the capture devices may be designed to try to reduce such a position offset as much as possible, it may still result in inaccuracies and errors when e.g. performing view shifting and image synthesis based on the images and depth information.

In the following, an approach and apparatus will be described which may generate an improved depth map in many scenarios and for many depth maps. The approach may specifically consider the depth values for at least two depth maps from different positions in order to generate a depth map for a capture position by warping these depth maps to the capture position and using a specific approach for combining the shifted depth maps, where the combining includes a specific consideration of whether pixels are designated certain or uncertain.

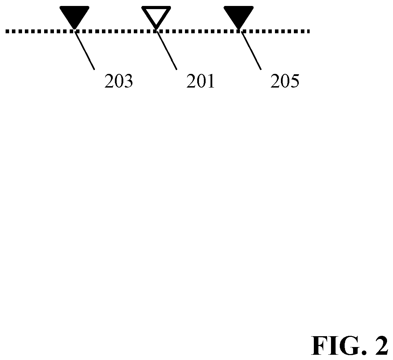

The approach will be described with reference to a capture arrangement as illustrated in FIG. 2. In the example, an optical camera is positioned at an image capture position 201, a first depth sensor is positioned at a first depth sense position 203, and a second depth sensor is positioned at a second depth sense position 205. The three positions are arranged to be in a line with the first depth sense position 203 and the second depth sense position 205 being on either side of the capture position 201.

In some embodiments, the optical camera and each of the depth sensors may e.g. be separate devices/ items. In other embodiments, the camera and depth sensors may for example be implemented in the same device, e.g. they may all be implemented in a single 3D camera device. In other embodiments, the depth sensors may for example be part of different devices or cameras. For example, a plurality of 3D cameras may each comprise one optical camera and one depth sensor arranged next to each other. Positioning these cameras next to each other may result in an arrangement as in FIG. 2 with the two depth sensors being depth sensors of adjacent 3D cameras. Thus, in such a scenario, each camera may provide an image for a capture position 201 and a depth map for a depth sense position 201, 203. Using the depth maps from two devices may accordingly provide depth maps for a first depth sense position 203 and a second depth sense position 205.

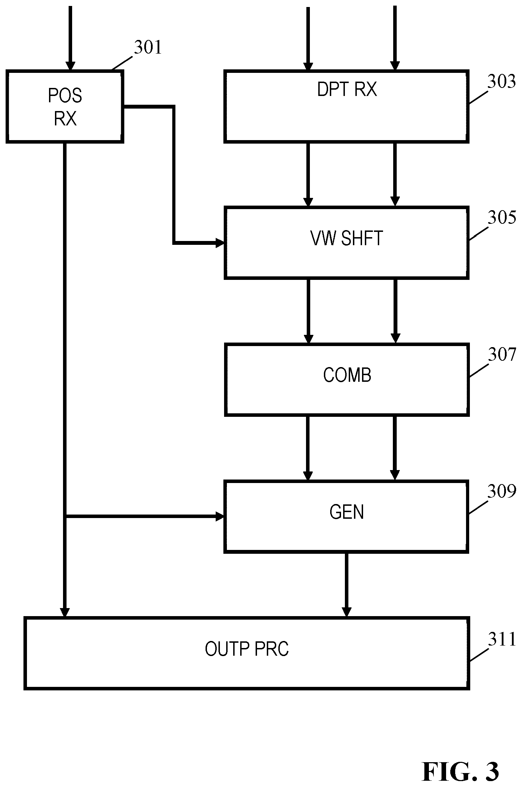

Elements of an apparatus for generating a depth map for a capture position is illustrated in FIG. 3. The operation of the apparatus will be described with specific reference to the arrangement of FIG. 2, but it will be appreciated that the described principles and approaches may be used with many different capture arrangements.

The apparatus of FIG. 3 comprises a position receiver 301 arranged to receive a capture position for an image with the capture position being a (scene) position for the capture of the image. The position receiver 301 may specifically be coupled to one or more cameras and may from these receive position indications (e.g. the cameras may include GPS functionality for determining a position and may provide this to the position receiver 301). In other embodiments, the position receiver 301 may receive the capture position from other means including from a separate device, from a dedicated position measurement, or e.g. by a direct user input of the capture position.

In the specific example, the position receiver 301 is coupled to the camera of the capture configuration of FIG. 2 and it receives data describing the capture position 201 directly from the camera.

The apparatus further comprises a depth receiver 303 which is arranged to receive depth maps representing the scene. Specifically, the depth receiver 303 may be arranged to receive depth maps from depth sensors of the capture configuration. In addition, the depth receiver 303 may receive position information indicating the positions for which the depth maps have been captured. Specifically, the depth receiver 303 may receive a first depth map providing depth values from a first position (also referred to as a first depth sense position), such as specifically a depth map from the sensor of FIG. 2 at the first depth sense position 203. The depth receiver 303 may further receive a second depth map providing depth values from a second position (also referred to as a second depth sense position), such as specifically a depth map from the sensor of FIG. 2 at the second depth sense position 205. The following description will focus on an embodiment where depth maps are only received from two positions, but it will be appreciated that in other embodiments depth maps from more positions may be received.

The depth receiver 303 further receives data indicating whether pixels of the first and second depth maps are designated as uncertain or certain pixels. The indication of whether a pixel is considered uncertain or not reflects a degree of certainty/ reliability/ confidence/ validity (or even existence) of the depth value of that pixel being correct/ an accurate indication of the depth of the object represented by the pixel.

In some embodiments, the depth receiver 303 may for example receive data comprising a list or other indication of all the pixels in the first and/or second depth maps which are considered uncertain, or an indication of all pixels that are considered certain. In other embodiments, the depth receiver 303 may for example receive a confidence map for each depth map where e.g. each pixel of the confidence map indicates the confidence level for the depth value of that pixel in the depth map. In some embodiments, the indications of whether pixels are certain may be included in the depth maps themselves. For example, depth values may be assigned to each pixel but with, say, odd values indicating certain values and even values indicating uncertain pixels. As another example, uncertain values may be indicated by a specific depth value, such as for example a depth value of zero being reserved to indicate that the depth value is uncertain.

It will also be appreciated that whereas the indications of uncertain/ certain pixels may be provided by binary values, they may in other embodiments be provided as non-binary values. For example, an indication of a confidence value may be indicated with a range that comprises a plurality of possible values. For example, a confidence value may be given by an 8-bit value. In such cases, a pixel may be designated as an uncertain value if the confidence value meets an uncertainty criterion and certain otherwise. Specifically, if the confidence value does not exceed a threshold, the pixel is designated as uncertain and otherwise it is designated as certain.

It will be appreciated that any suitable approach and criterion for designating depth values/ pixels of the depth values as certain/ uncertain may be used depending on the specific preferences and requirements of the individual embodiment.

The depth receiver 303 and the position receiver 301 are coupled to a view shift processor 305 which is arranged to perform view shifting of the depth maps. The view shifting of the depth maps shifts the depth maps from representing depth from the depth sense positions to representing depth from the capture position for the image. Thus, the view shift processor 305 is arranged to view shift the first depth map from the first depth sense position 203 to the capture position 201 and to view shift the second depth map from the second depth sense position 205 to the capture position 201.

Thus, the view shift processor 305 is arranged to generate view shifted depth maps for the capture position from the depth maps of the positions of the different depth sensors. Accordingly, following the view shifting of the view shift processor 305, all the view shifted depth maps represent depths from the same position, and indeed from the same position from which the image is captured.

It will be appreciated that many different algorithms for view shifting images and depth maps are known by the skilled person and these will for brevity and clarity not be described herein. It will be appreciated that any suitable view shift approach and algorithm may be used without detracting from the invention (and it is noted that view shifting of images can typically be directly applied to view shifting of depth maps).

The view shift processor (305) is further arranged to designate pixels of the view shifted depth maps as being uncertain or not depending on the designation of pixels in the original depth maps being view shifted.

The view shift processor 305 is specifically arranged to designate as uncertain pixels of the view shifted depth map(s) for which no depth values for pixels not designated as uncertain pixels in the original depth map are projected by the view shifting.

The view shifting will move positions of the pixels in the original depth map to modified positions in the view shifted depth map with the change depending on the view shift. As such, each pixel in the view shifted depth map may receive a contribution from none, one, or more pixels in the original depth map. If a given pixel in the view shifted depth map does not receive any contribution from a pixel in the original depth map which is considered a certain pixel, then the pixel is designated as being an uncertain pixel. If the pixel receives no contribution from any pixel, then it is designated as an uncertain pixel. If the pixel receives a contribution from one or more original pixels but these are all designated as uncertain pixels, then the pixel is also designated as an uncertain pixel. Such a contribution may e.g. arise from a depth value being used for the uncertain pixel, such as a default value or an estimated value that is however considered to be unreliable. However, in many embodiments, no depth value may be considered to be associated with an uncertain pixel and thus no view shifting is performed for an uncertain pixel. Thus, in such scenarios, no uncertain pixel will provide a contribution to another pixel as a result of view shifting.

If, however, the pixel receives a contribution from one or more pixels of the original depth map that are designated as certain, then the pixel of the view shifted depth map is designated as a certain pixel. In cases where more than one certain pixels shift to a given pixel as a result of view shifting, the depth value may typically be selected as the most forward one.

Thus, in many embodiments, if there is no certain pixel being projected to a given pixel by the view shifting, the pixel may be determined as uncertain. All other pixels may in some embodiments be designated as certain (not uncertain) pixels.

In some embodiments, a pixel of a view shifted depth map may be considered as an uncertain pixel if one pixel of the original depth map projects to the pixel as a result of the view shifting. Thus, in some embodiments, a pixel may be designated as a certain pixel if at least one certain pixel of the original depth map projects to the pixel, and in some embodiments furthermore subject to the requirement that no uncertain pixels project to it. All other pixels may in some embodiments be designated as uncertain pixels.

The depth value for a view shifted pixel may in case of a plurality of depth values projecting to the pixel as a result of the view shifting be determined in accordance with a suitable combination criterion. In many embodiments, any depth values from uncertain pixels may be discarded and the combination may only include depth values from certain pixels. Typically, the combination of a plurality of depth values from certain pixels may typically be a selection combination, such as specifically selecting the most forward pixel. In other embodiments, other approaches may be used including for example a weighted combination or a confidence level based combination or selection.

The view shift processor 305 is coupled to a combiner 307 which generates a combined depth map for the capture position by combining depth values of same position pixels of the view shifted depth maps. A same position of pixels in different depth maps (from the capture position) are pixels that represents the same view direction from the capture position. The same position pixels may be pixels of the view shifted depth maps that represent the same view direction from the capture position. For a given pixel in the combined depth map, the depth values for the same pixel (at the same positions) in the view shifted depth maps are combined in accordance with a suitable formula to generate the combined depth value for the pixel. The process may be repeated for all pixels of the combined depth map.

The combiner 307 is further arranged to designate pixels of the combined depth map as uncertain or not depending on the designation of the pixels of the view shifted depth maps being combined. The combiner 307 is specifically arranged to designate a pixel as uncertain if any of the pixels at the same position from the view shifted depth maps is designated as uncertain. Thus, if any pixel used in the combination to determine a combined depth value for the combined depth map is designated as an uncertain pixel, then the corresponding pixel of the combined depth map is also designated as an uncertain pixel (even if one or more pixels is designated as certain). Specifically, the combiner 307 may designate pixels of the combined depth map as certain only if all pixels of the view shifted depth maps at the same position are designated as certain and if any of the pixels is designated as uncertain then the combined pixel is designated as uncertain.

In many embodiments, the combiner 307 may be arranged to generate the depth values of the combined depth map as a weighted combination of depth values in the view shifted depth maps. The combination for a given pixel representing a given view direction may be a weighted combination of the depth values of the view shifted depth maps representing the same direction and which are not designated as uncertain depth pixels.

As a specific example, each view shifted depth map may be initialized with a value u that indicates that the pixel/ depth value is uncertain. For a 16-bit integer depth coding, the value 0 may typically be used. The depth map pixel

value $z_i(x, y)$ of depth map/ sensor/ position i is view shifted to the capture position $k$. Let $\tilde{z}_{ik}(x, y)$ denote this view shifted depth value. Note that due to the initialization, $\tilde{z}_{ik}(x, y)$ will also contain uncertain pixels indicated by the reserved value $u$.

If we now have two predictions from opposite directions, the combined depth value $z_k(x, y)$ may be determined as:

$$z_k(x, y) = \begin{cases} u & \text{if} \quad \tilde{z}_{ik}(x, y) = u \text{ OR } \tilde{z}_{jk}(x, y) = u \\ \frac{\tilde{z}_{ik}(x,y)+\tilde{z}_{jk}(x,y)}{2} & \text{otherwise} \end{cases}$$

The above equation provides two functions: (1) the uncertain pixels are dealt with; (2) if both predictions are certain they are averaged to suppress remaining depth measurement noise. Such a weighting may be more accurate in the presence of depth noise, depth quantization, and or camera/sensor calibration errors.

The apparatus further comprises a depth map generator 309 arranged to generate an output depth map for the capture position by determining depth values of the combined depth map for the pixels that are designated as uncertain. The depth map generator 309 may thus generate (new) depth values for the uncertain pixels. The generation of these new values are typically based on at least one of image values of the image and depth values of the combined depth map that are not designated as uncertain.

In many embodiments, the depth map generator 309 may perform an image based extrapolation of certain depth values. For example, the depth value for an uncertain pixel may be determined by a weighted combination of depth values of certain pixels within a kernel/neighborhood of the pixel. The weights of the combination may be dependent on the image similarities between the corresponding pixels in the image. Such an approach may typically provide a very efficient generation of depth values. As an alternative, multi-view correspondence estimation based on matching may be used to estimate depth for the uncertain pixels. The certain pixels can help to locally constrain the solution.

The described apparatus may allow improved depth maps to be generated for an image from depth information provided by (offset) depth sensors. In many embodiments, it may provide more accurate depth values, and in particular around depth transitions in the scene as seen from the capture position. The improved depth maps may further allow improved view shifting and image synthesis based on the image and the combined depth map, thereby allowing improved services such as improved immersive video, eXtended Reality applications, etc.

The approach is in particular based on the Inventor's realization that conventional approaches may result in artefacts and errors.

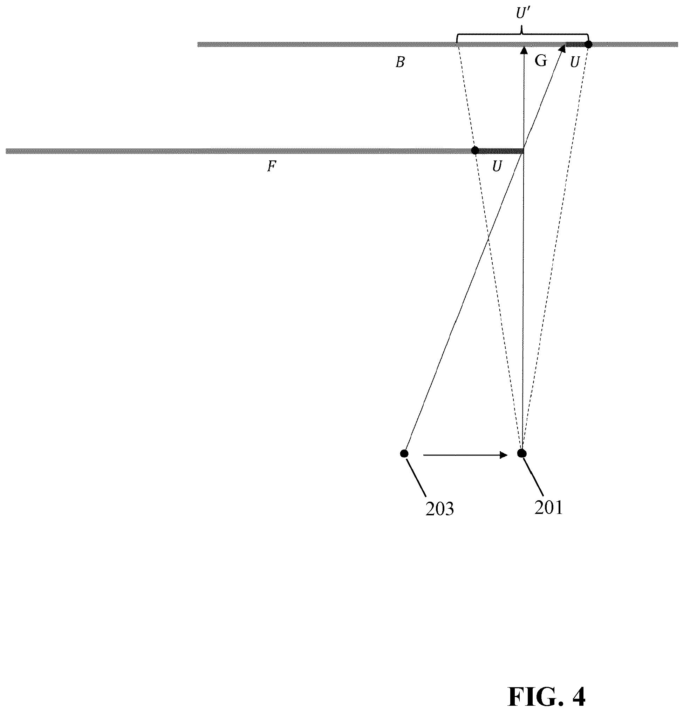

FIG. 4 illustrates an example of a scene being captured which comprises a background object B and a foreground object F. The example further shows how the scene may be viewed/ captured from a first depth sense position 203. In the example, an uncertain depth sensing area U is captured around the depth transition. Due to the depth transition, the depth sensor is not capable of providing an accurate depth measurement and therefore the depth values around the depth transition are considered to be uncertain and the pixels around this area are therefore designated as uncertain.

If this first depth map is view shifted to the capture position 201 (the position of the image camera), the foreground and background depth values move differently and as indicated in FIG. 4, the view of the depth transition and the areas that correspond to the uncertain depth transition changes. Specifically, two distinct areas U of uncertain pixels occur. Further, a gap G is introduced for which no depth values can be determined based on the first depth map (i.e. de-occlusion occurs). The view shift processor 305 may in such an example set the entire area of uncertain and de-occluded pixels (U+G) as uncertain pixels U'.

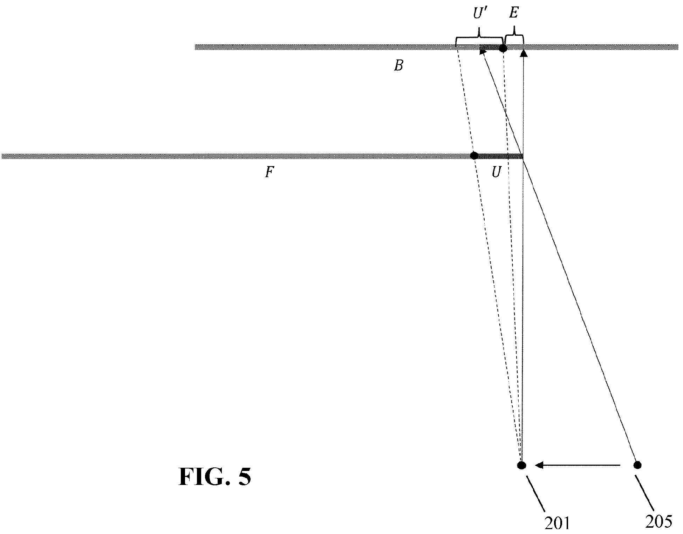

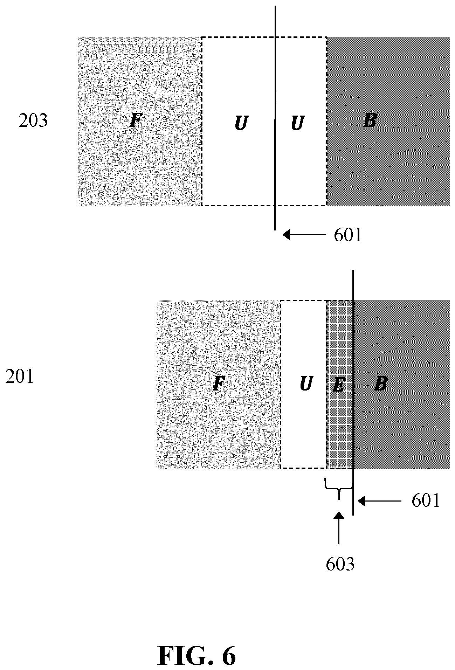

FIG. 5 illustrates the corresponding situation captured from the second depth sense position 205. In this case, there is no gap as no de-occlusion occurs. Further, the uncertain area of the foreground object not only overlaps the uncertain area U' of the background object but also overlaps some of the certain area E of the background object. The corresponding situation when considering the depth maps is illustrated in FIG. 6 which shows respectively the depth map captured at the second depth sense position 205 and the resulting view shifted depth map for the capture position 201. The figure also illustrates the position of the true depth step 601 for reference. As illustrated, an area 603 corresponds to the overlap of the uncertain area of the background object B.

Thus, warping (view shifting) a depth image to a new viewpoint may result in valid/certain depth pixels of the background covering the new uncertain region (of a foreground object). Thus, special care must preferably be taken when view shifting and combining depth maps in order to not result in undesired effects.

The approach described above is arranged to mitigate or even prevent such scenarios occurring. It reflects the Inventor's realization that such an issue specifically occurs when a foreground object occludes a background object but not when a foreground object de-occludes a background object. Further, the Inventor has realized that by positioning depth sensors with different directions relative to the capture position and view shifting and combining the view shifted images as previously described, an improved approach can be achieved. In particular, the approach may designate pixels as uncertain if they are uncertain when resulting from view shifts from depth sensors in different directions, and this may prevent any pixel to be designated as certain unless it is ensured that no occlusion of background objects occur.

The approach may typically result in a larger uncertain area that however ensures that depth values are not designated as certain while resulting from occlusion of a background object by a foreground object. The combined consideration of more depth maps from different directions may thus reduce the risk of faulty depth values being designated as being certain due to the warping operation.

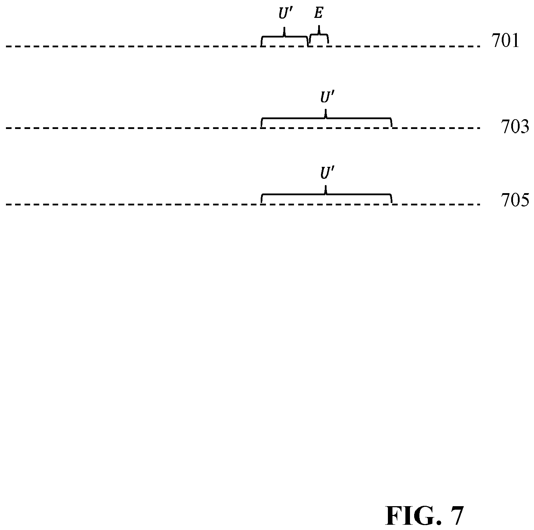

In the approach described above, the apparatus is arranged to designate pixels as uncertain if indeed any of the view shifted depth maps has a corresponding pixel which is designated as uncertain. FIG. 7 illustrates this being applied to the scenario of FIGs. 4 to 6 and specifically FIG. 7 illustrates the designations applied to a horizontal row of respectively the first view shifted depth map 701, the second view shifted depth map 703, and the resulting combined depth map 705.

The approach may adapt automatically to scene properties etc. and may typically adaptively determine an uncertain area of pixels that reflect the actual scene scenario. Thus, for different capture scenarios, the approach may automatically adapt the size of the uncertain area to correspond to the actual scene properties. For example, the approach may automatically be appropriate to depth transitions in opposite directions and no information of a direction, or even presence, of any depth step is necessary.

Although, the approach may in some scenarios result in a designation of pixels of a larger area as uncertain than perhaps strictly necessary, this is typically a fully acceptable trade-off as depth values for such an area may be determined based on the image based extrapolation, multi-view matching etc.

In some embodiments, the apparatus may further comprise a view synthesis processor (not shown) which is arranged to generate a view image for a view pose (at a different position than the capture position) from the image and the combined depth map. It will be appreciated that many algorithms for such view synthesis will be known to the skilled person.

The described approach is particularly suitable for some capture configurations comprising one or more image cameras and two or more depth sensors. In particular, capture arrangements may advantageously be arranged such that occlusion by foreground objections do not (and ideally cannot) occur for all depth sensors at the same time.

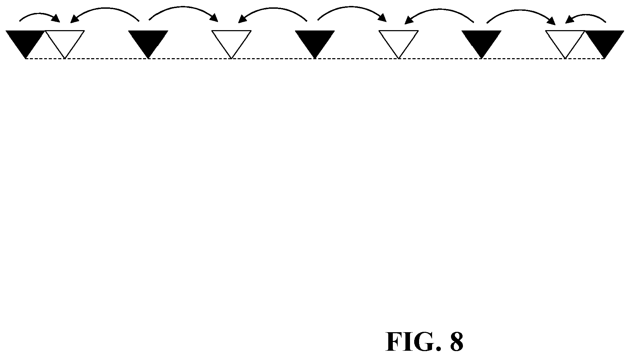

In many embodiments, such as in the example of FIG. 2, the image camera(s) and depth sensors may advantageously be arranged in a linear configuration and advantageously with depth sensors being on opposite sides of the image camera. Thus, in many embodiments, the capture position may advantageously be arranged in a linear configuration with the capture position being between the depth sense positions. Such a configuration may be extended to a plurality of image cameras and to more depth sensors as indicated in FIG. 8 (where solid triangles indicate depths sensors and unfilled triangles indicate image cameras).

In these examples, the depth sensors and image cameras are positioned along a line and the directions from the capture position 201 to at least two different depth sensors are 180°. Thus, in that example a direction from the capture position to one depth sense position and a direction from the capture position to another depth sense position form an angle of 180°. However, it is not strictly required that the angle is 180° and rather it may be lower in some embodiments. In many embodiments, it is increasingly advantageous the closer the angle approaches 180°, but it is in many embodiments sufficient for the angle to be no less than 90° 100°, 120°, 140°, 160° depending on the specific requirements of the individual embodiment. Thus, in many embodiments, an angle between a line connecting the capture position to the first position and a line connecting the capture position to the second position is no less than 90° 100°, 120°, 140°, 160°. In many embodiments, an angle between a line through the capture position and the first position, and a line through the capture position and the second position is no less than 90° 100°, 120°, 140°, 160°.

The arrangement is typically such that at least two depth sense positions are arranged so that when performing the view shift to the capture position, the directions of movement of pixels of the same depth caused by the view shifts are in opposite directions. For a given pixel in the combined depth map, a contribution may be provided from a pixel from a pixel right of the given pixel and another contribution may be provided from a pixel left of the given pixel. In some embodiments, the first position, the second position, and the capture position are arranged such that a direction of movement of image coordinates for a given depth is in opposite directions for the view shifting of at least two different depth maps/ for at least two depth sense positions.

Such effects are typically achieved e.g. by constructions as previously described (and as described in the following) and may provide particularly advantageous performance by ensuring that pixels that are potentially occluded are appropriately designated as uncertain.

In many embodiments, the capture arrangement may comprise a plurality of image cameras which are positioned at different positions. Such an approach may allow an improved capture of the scene and in particular for 3D processing and view synthesis for different view poses (e.g. reducing the risk of parts of the scene being occluded in all captured images).

In many cases the arrangement of at least a second image camera will be such that the properties described above for the first image camera/ capture position is also met for the second image camera/ capture position. In particular, an angle between a direction/ line from the second capture position to/through the first depth sense position and a direction/line from/through the further capture position to the second position is no less than 90°. 100°, 120°, 140°, 160°.

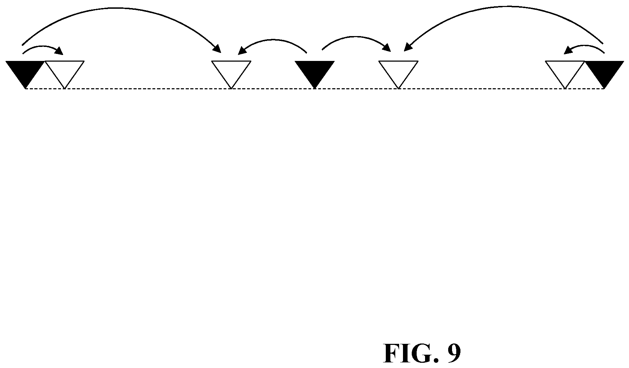

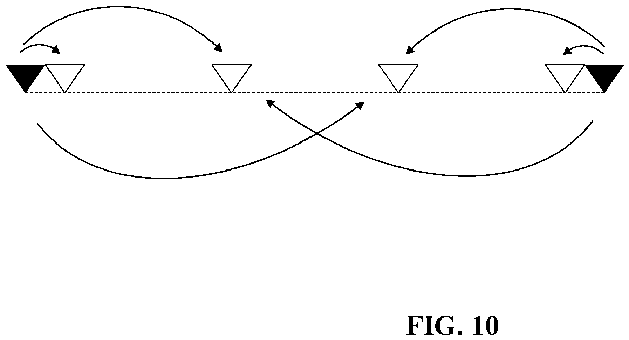

In such an arrangement, the operation described with respect to the first image camera/ capture position may also be performed for the second image camera/ capture position based on the same depth sensors and the same depth maps. It will be appreciated that the approach may be repeated for more cameras. For example, FIGs. 9 and 10 illustrate examples of a linear configuration where multiple cameras can be processed as described based on common depth sensors.

In many embodiments, a capture configuration may be employed in which a plurality of image cameras and a plurality of depth sensors are employed in a configuration where for all image cameras an angle between a direction/line from the corresponding capture position to/through at least one of the depth sense position and a direction/line from/through the corresponding capture position to at least another depth sense position is no less than 90°, 100°, 120°, 140°, 160°.

In many such embodiments, the image cameras and image sensors are advantageously arranged in a linear configuration. Examples of suitable configurations are illustrated in FIGs. 8, 9 and 10.

In some such systems, at least one depth sensor may advantageously be located between each pair of adjacent image cameras of the plurality of image cameras. In particular, in some embodiments, the configuration may include an alternating arrangement of depth sensors and image cameras. Such an approach may for example allow improved performance, and may for example allow the areas of uncertain pixels to be reduced as shorter view shifts are required from the nearest depth sensor in either direction. It may further in many embodiments allow facilitated implementation. For example, it may allow the configuration to be implemented using a plurality of combined cameras that include one image camera and one depth sensor. Often, such combined cameras may simply be positioned in line.

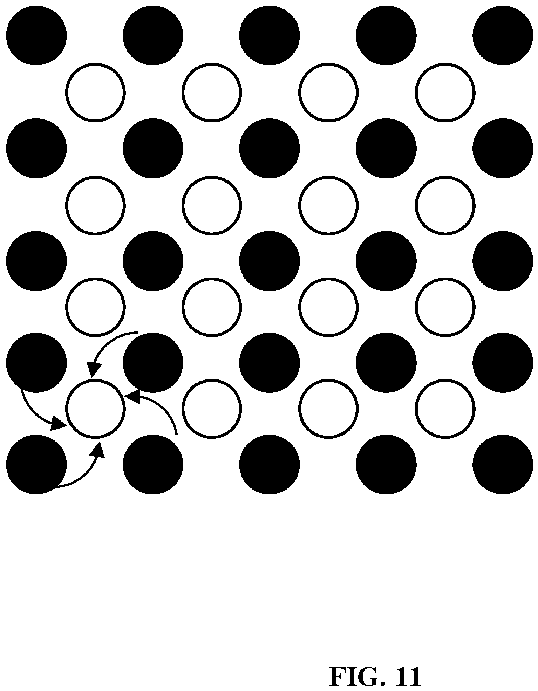

In the previous description, the considered capture configurations have predominantly been one-dimensional configurations of cameras and depth sensors in a linear arrangement. However, in many embodiments, the image cameras and depth sensors may advantageously be arranged in a two-dimensional configuration. In such an example, the depth sensors may not be directly to the side of the depth camera(s) but may for example also be offset in a different direction. Such an example is illustrated in FIG. 11.

The previously described properties and relationships may typically also apply to two-dimensional configurations and configurations with a relatively large number of image cameras and/or depth sensors. The approach may specifically include selecting a suitable set (or subset) of depth sensors for each camera and then performing the described operation for these depth sensors. In many embodiments, the subset of depth sensors for a given depth camera may consist in two depth sensors.

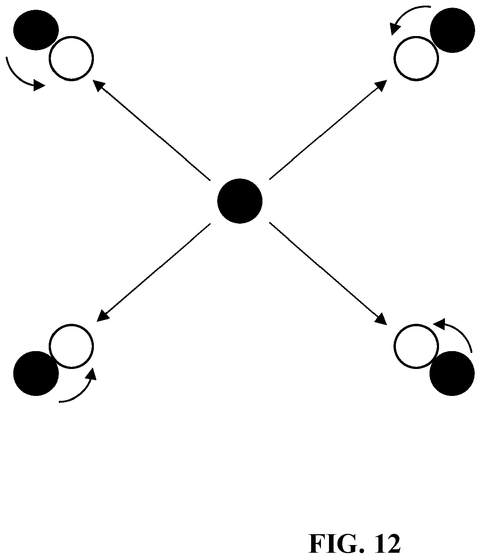

In many embodiments, (at least some of) the depth sensors may be arranged asymmetrically around the image camera. For example, in many embodiments, a distance to a next nearest depth sensor/ depth sensor position may be no less than twice, or in some cases 5 or even 10 times, a distance to a nearest depth sensor/ depth sense position. For example, in many embodiments, a depth sensor may be placed very close to one, some, or often all image cameras. Such a close sensor may reduce the view shift that is required to change from the depth sense position to the camera position and may tend to provide a more accurate depth map for the image. Another depth sensor may be positioned substantially further away e.g. on the opposite side of the image camera and may be particularly suitable to assist in determining uncertain pixels as previously described. Due to the further distance, the depth values may not be as accurate and therefore these may predominantly or exclusively be based on the proximal depth sensors whereas the remote depth sensor may predominantly or exclusively be used to determine uncertain areas. Such an approach may be highly advantageous in many embodiments as it may allow or facilitate the use of some depth sensors for a plurality of image cameras. For example, in the example of FIG. 12, each camera may be almost colocated with one image sensor (and indeed they may be part of the same combined camera device). This depth sensor may predominantly be the source of the depth values of the depth map generated for the image camera. However, in addition a single depth sensor may be centrally positioned for a plurality of image cameras such that it is opposite the local depth sensors. This single depth sensor may allow the described approach to be used for all image cameras and thus only a single central depth sensor is required.

In some capture arrangements, the number of depth sensors may exceed the number of image cameras. This may in many embodiments facilitate operation and/or improve performance. It may for example be highly suitable for scenarios wherein depth sensors may be substantially cheaper than image cameras. The higher number of depth sensors may typically allow a more flexible arrangement which may be directed at providing accurate depth information for the images. It may also typically reduce the size of the areas of uncertain pixels. The described approach may provide highly advantageous operation in scenarios where the number of depth sensors exceed the number of image cameras.

In some capture arrangements, the number of image cameras may exceed the number of depth sensors. This may in many embodiments facilitate operation and/or improve performance. It may for example be highly suitable for scenarios wherein image cameras may be cheaper or more readily available than depth sensors. The described approach may provide highly advantageous operation in scenarios where the number of image cameras exceed the number of depth sensors.

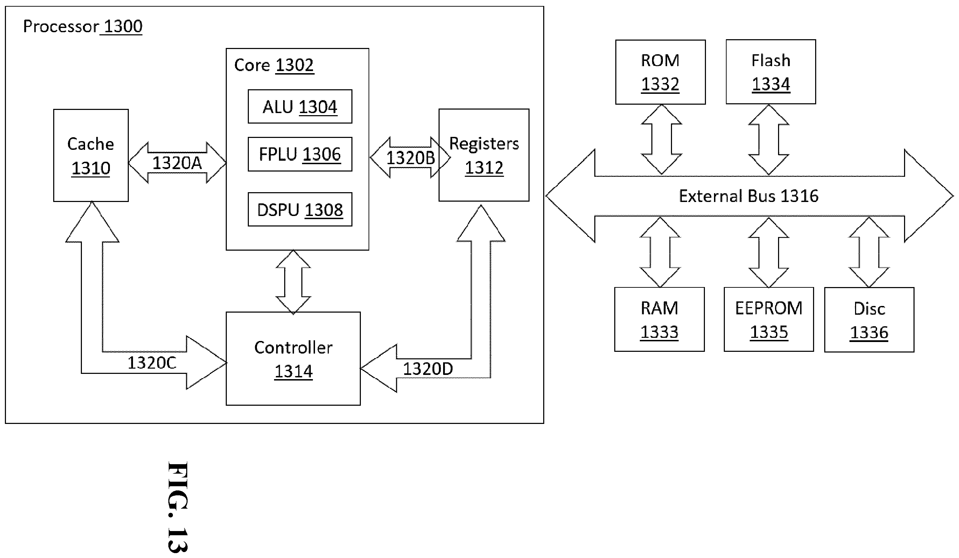

FIG. 13 is a block diagram illustrating an example processor 1300 according to embodiments of the disclosure.

Processor 1300 may be used to implement one or more processors implementing an apparatus as previously described or elements thereof. Processor 1300 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 1300 may include one or more cores 1302. The core 1302 may include one or more Arithmetic Logic Units (ALU) 1304. In some embodiments, the core 1302 may include a Floating Point Logic Unit (FPLU) 1306 and/or a Digital Signal Processing Unit (DSPU) 1308 in addition to or instead of the ALU 1304.

The processor 1300 may include one or more registers 1312 communicatively coupled to the core 1302. The registers 1312 may be implemented using dedicated logic gate circuits (e.g., flip-flops) and/or any memory technology. In some embodiments the registers 1312 may be implemented using static memory. The register may provide data, instructions and addresses to the core 1302.

In some embodiments, processor 1300 may include one or more levels of cache memory 1310 communicatively coupled to the core 1302. The cache memory 1310 may provide computer-readable instructions to the core 1302 for execution. The cache memory 1310 may provide data for processing by the core 1302. In some embodiments, the computer-readable instructions may have been provided to the cache memory 1310 by a local memory, for example, local memory attached to the external bus 1316. The cache memory 1310 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 1300 may include a controller 1314, which may control input to the processor 1300 from other processors and/or components included in a system and/or outputs from the processor 1300 to other processors and/or components included in the system. Controller 1314 may control the data paths in the ALU 1304, FPLU 1306 and/or DSPU 1308. Controller 1314 may be implemented as one or more state machines, data paths and/or dedicated control logic. The gates of controller 1314 may be implemented as standalone gates, FPGA, ASIC or any other suitable technology.

The registers 1312 and the cache 1310 may communicate with controller 1314 and core 1302 via internal connections 1320A, 1320B, 1320C and 1320D. Internal connections may be implemented as a bus, multiplexer, crossbar switch, and/or any other suitable connection technology. Inputs and outputs for the processor 1300 may be provided via a bus 1316, which may include one or more conductive lines. The bus 1316 may be communicatively coupled to one or more components of processor 1300, for example the controller 1314, cache 1310, and/or register 1312. The bus 1316 may be coupled to one or more components of the system.

The bus 1316 may be coupled to one or more external memories. The external memories may include Read Only Memory (ROM) 1332. ROM 1332 may be a masked ROM, Electronically Programmable Read Only Memory (EPROM) or any other suitable technology. The external memory may include Random Access Memory (RAM) 1333. RAM 1333 may be a static RAM, battery backed up static RAM, Dynamic RAM (DRAM) or any other suitable technology. The external memory may include Electrically Erasable Programmable Read Only Memory (EEPROM) 1335. The external memory may include Flash memory 1334. The External memory may include a magnetic storage device such as disc 1336. In some embodiments, the external memories may be included in a system.

All positions may be referenced to a scene coordinate system.

The invention can be implemented in any suitable form including hardware, software, firmware, or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

In accordance with standard terminology in the field, the term pixel may be used to refer to a property associated with the pixel, such as a light intensity, depth, position of a part/ element of the scene represented by the pixel. For example, a depth of a pixel, or a pixel depth, may be understood to refer to the depth of the object represented by that pixel. Similarly, a brightness of a pixel, or a pixel brightness, may be understood to refer to the brightness of the object represented by that pixel. Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

**Claims**

1. An apparatus for generating a depth map for an image representing a view of a scene, the apparatus comprising:

   a position receiver (301) arranged to receive a capture position for the image, the capture position being a position of a capture of the image;
   a depth receiver (303) arranged to receive a first depth map providing depth values from a first position and a second depth map providing depth values from a second position, the first depth map including at least some pixels designated as uncertain depth pixels and the second depth map including at least some pixels designated as uncertain depth pixels;
   a view shift processor (305) arranged to perform a first view shift of the first depth map from the first position to the capture position to generate a first view shifted depth map, and to perform a second view shift of the second depth map from the second position to the capture position to generate a second view shifted depth map, the view shift processor (305) further being arranged to designate as uncertain:

      pixels of the first view shifted depth map to which no depth values for pixels not designated as uncertain pixels in the first depth map are projected by the first view shifting, and
      pixels of the second view shifted depth map to which no depth values for pixels not designated as uncertain pixels in the second depth map are projected by the second view shifting;

   a combiner (307) arranged to generate a combined depth map for the capture position by combining depth values of same position pixels of the first view shifted depth map and of the second view shifted depth map, the combiner (307) being arranged to designate pixels of the combined depth map as uncertain depth pixels if any same position pixel is designated as an uncertain pixel; and
   a depth map generator (309) arranged to generate an output depth map for the capture position by determining depth values of the combined depth map designated for pixels designated as uncertain pixels using at least one of image values of the image and depth values of pixels of the combined depth map that are not designated as uncertain.

2. The apparatus of claim 1 wherein an angle between a direction from the capture position to the first position and a direction from the capture position to the second position is no less than 90°.

3. The apparatus of claim 1 or 2 wherein the first position, the second position, and the capture position are arranged in a linear configuration with the capture position being between the first position and the second position.

4. The apparatus of any previous claim wherein the first position, the second position, and the capture position are arranged such that a direction of movement of pixels at a same depth is in opposite directions for the first view shift and the second view shift.

5. The apparatus of any previous claim wherein the combiner (307) is arranged to determine a depth value of the combined depth map for a given pixel as a weighted combination of a first depth value for a pixel in the first view shifted map not designated as an uncertain depth pixel and having a same position as the given pixel, and a second depth value in the second view shifted not designated as an uncertain depth pixel and map having a same position as the given pixel.

6. The apparatus of any previous claim wherein the depth map generator (309) is arranged to generate depth values for pixels designated as uncertain in the combined depth map by estimation from depth values for pixels not designated as uncertain in the combined depth map.

7. A capture system comprising the apparatus of any previous claim and further comprising:

a first image camera at the capture position arranged to provide the image to the image receiver (301);
a first depth sensor at the first position arranged to provide depth data for the first depth map to the depth receiver (303); and
a second depth sensor at the second position arranged to provide depth data for the second depth map to the depth receiver (303).

8. The capture system of claim 7 further comprising at least one further image camera at a further capture position, an angle between a direction from the further capture position to the first position and a direction from the further capture position to the second position being no less than 90°.

9. The capture system of any of claims 7 and 8 comprising a plurality of image cameras including the first image camera, and a plurality of depth sensors including the first depth sensor and the second depth sensor arranged in a configuration such that for all image cameras of the plurality of image cameras two depth sensors of the plurality of depth sensors are arranged such that an angle between directions from a position of the image camera to the two depth sensors is no less than 120°.

10. The capture system of claim 9 wherein the plurality of image cameras and the plurality of depth sensors are arranged in a linear configuration.

11. The capture system of claim 9 or 10 wherein at least one depth sensor of the plurality of depth sensors is located between each pair of adjacent image cameras of the plurality of image cameras.

12. The capture system of claim 11 wherein the plurality of image cameras and the plurality of depth sensors are arranged in a two-dimensional configuration.

13. The capture system of any of claims 9 to 12 wherein a number of depth sensors of the plurality of depth sensors exceeds a number of image cameras of the plurality of image cameras.

14. The capture system of any of claims 9 to 12 wherein a number of image cameras of the plurality of image cameras exceeds a number of depth sensors of the plurality of depth sensors.

15. A method of generating a depth map for an image representing a view of a scene, the method comprising:

receiving a capture position for the image, the capture position being a position of a capture of the image;
receiving a first depth map providing depth values from a first position and a second depth map providing depth values from a second position, the first depth map including at least some pixels designated as uncertain depth pixels and the second depth map including at least some pixels designated as uncertain depth pixels;
performing a first view shift of the first depth map from the first position to the capture position to generate a first view shifted depth map,
performing a second view shift of the second depth map from the second position to the capture position to generate a second view shifted depth map,
designating as uncertain:

pixels of the first view shifted depth map to which no depth values for pixels not designated as uncertain pixels in the first depth map are projected by the first view shifting, and
pixels of the second view shifted depth map to which no depth values for pixels not designated as uncertain pixels in the second depth map are projected by the second view shifting;

generating a combined depth map for the capture position by combining depth values of same position pixels of the first view shifted depth map and of the second view shifted depth map, the combiner being arranged to designate pixels of the combined depth map as uncertain depth pixels if any same position pixel is designated as an uncertain pixel; and
generating an output depth map for the capture position by determining depth values of the combined depth map designated as uncertain depth values using at least one of image values of the image and depth values not designated as uncertain.

**16.** A computer program product comprising computer program code means adapted to perform all the steps of claim 15 when said program is run on a computer.

**FIG. 1**

203    201    205

**FIG. 2**

FIG. 3

FIG. 4

**FIG. 5**

203

F    U   U    B

← 601

201

F    U E B

← 601

603

**FIG. 6**

$U'$  $E$

701

$U'$

703

$U'$

705

**FIG. 7**

FIG. 8

**FIG. 9**

**FIG. 10**

**FIG. 11**

FIG. 12

FIG. 13

Europäisches
Patentamt

European
Patent Office

Office européen
des brevets

## EUROPEAN SEARCH REPORT

Application Number

EP 22 19 6875

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/148207 A1 (VAREKAMP CHRISTIAAN [NL] ET AL) 12 May 2022 (2022-05-12)<br>* abstract *<br>* paragraph [0001] *<br>* paragraph [0007] – paragraph [0008] *<br>* paragraph [0011] – paragraph [0021] *<br>* paragraph [0025] – paragraph [0026] *<br>* paragraph [0071] – paragraph [0073] *<br>* paragraph [0091] – paragraph [0094] *<br>* paragraph [0099] – paragraph [0112] *<br>* paragraph [0119] – paragraph [0126] *<br>* paragraph [0149] – paragraph [0151] *<br>* paragraph [0156] – paragraph [0159] *<br>* paragraph [0177] – paragraph [0179] *<br>* figures 6,7 *<br>----- | 1-16 | INV.<br>H04N21/81<br>H04N21/218<br>H04N13/271<br>H04N5/222<br>H04N23/90<br>H04N23/95<br>G06T7/50<br>H04N19/597 |
| X | US 2013/222534 A1 (RUSANOVSKYY DMYTRO [FI] ET AL) 29 August 2013 (2013-08-29)<br>* abstract *<br>* paragraph [0002] – paragraph [0004] *<br>* paragraph [0097] *<br>* paragraph [0101] – paragraph [0106] *<br>* paragraph [0109] *<br>* paragraph [0114] *<br>* paragraph [0123] *<br>* paragraph [0128] – paragraph [0131] *<br>* paragraph [0136] *<br>* paragraph [0144] *<br>* figure 8 *<br>-----<br>-/-- | 1-16 | TECHNICAL FIELDS SEARCHED (IPC)<br><br>H04N<br>G06T |

The present search report has been drawn up for all claims

| Place of search | Date of completion of the search | Examiner |
|---|---|---|
| The Hague | 20 February 2023 | Fantini, Federico |

EPO FORM 1503 03.82 (P04C01)

page 1 of 3

**EUROPEAN SEARCH REPORT**

Europäisches Patentamt
European Patent Office
Office européen des brevets

Application Number

EP 22 19 6875

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/394441 A1 (SIMEK KYLE [US] ET AL) 26 December 2019 (2019-12-26)<br>* abstract *<br>* paragraph [0004] *<br>* paragraph [0033] *<br>* paragraph [0050] *<br>* paragraph [0065] – paragraph [0067] *<br>* paragraph [0071] *<br>* paragraph [0078] – paragraph [0079] *<br>* paragraph [0096] – paragraph [0102] *<br>* paragraph [0115] – paragraph [0117] *<br>* paragraph [0124] – paragraph [0125] *<br>* paragraph [0176] *<br>* figures 6,15 *<br>----- | 1-16 | |
| A | KAUFF ET AL: "Depth map creation and image-based rendering for advanced 3DTV services providing interoperability and scalability",<br>SIGNAL PROCESSING. IMAGE COMMUNICATION, ELSEVIER SCIENCE PUBLISHERS, AMSTERDAM, NL,<br>vol. 22, no. 2, 16 March 2007 (2007-03-16), pages 217-234, XP005938670,<br>ISSN: 0923-5965, DOI: 10.1016/J.IMAGE.2006.11.013<br>* abstract *<br>* page 218, column 1 – page 225, column 2 *<br>* page 227, column 1 – page 228, column 2 *<br>* page 230, column 1 – column 2 *<br>* page 233, column 1 *<br>* figures 1,3,4 *<br>----- | 1-16 | TECHNICAL FIELDS SEARCHED (IPC) |
| | -/-- | | |

The present search report has been drawn up for all claims

| Place of search | Date of completion of the search | Examiner |
|---|---|---|
| The Hague | 20 February 2023 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LASANG PONGSAK ET AL: "Optimal depth recovery using image guided TGV with depth confidence for high-quality view synthesis", JOURNAL OF VISUAL COMMUNICATION AND IMAGE REPRESENTATION, ACADEMIC PRESS, INC, US, vol. 39, 12 May 2016 (2016-05-12), pages 24-39, XP029624008, ISSN: 1047-3203, DOI: 10.1016/J.JVCIR.2016.05.006 * abstract * * page 24, column 1 - page 25, column 2 * * page 26, column 2 - page 28, column 2 * * page 30, column 1 - column 2 * * figure 2 * | 1-16 | |
| A | EP 3 866 104 A1 (KONINKLIJKE PHILIPS NV [NL]) 18 August 2021 (2021-08-18) * abstract * * paragraph [0048] - paragraph [0050] * * paragraph [0067] * * paragraph [0079] - paragraph [0080] * * paragraph [0088] * * figure 3 * | 1-16 | TECHNICAL FIELDS SEARCHED (IPC) |

The present search report has been drawn up for all claims

| Place of search | Date of completion of the search | Examiner |
|---|---|---|
| The Hague | 20 February 2023 | Fantini, Federico |

EPO FORM 1503 03.82 (P04C01)

## ANNEX TO THE EUROPEAN SEARCH REPORT
## ON EUROPEAN PATENT APPLICATION NO.

EP 22 19 6875

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2023

| Patent document cited in search report | | Publication date | Patent family member(s) | | Publication date |
|---|---|---|---|---|---|
| US 2022148207 | A1 | 12-05-2022 | CA 3131980 | A1 | 10-09-2020 |
| | | | CN 113795863 | A | 14-12-2021 |
| | | | EP 3706070 | A1 | 09-09-2020 |
| | | | EP 3935602 | A1 | 12-01-2022 |
| | | | JP 2022522504 | A | 19-04-2022 |
| | | | KR 20210134956 | A | 11-11-2021 |
| | | | TW 202101374 | A | 01-01-2021 |
| | | | US 2022148207 | A1 | 12-05-2022 |
| | | | WO 2020178289 | A1 | 10-09-2020 |
| US 2013222534 | A1 | 29-08-2013 | US 2013222534 | A1 | 29-08-2013 |
| | | | WO 2013030452 | A1 | 07-03-2013 |
| US 2019394441 | A1 | 26-12-2019 | US 2018139431 | A1 | 17-05-2018 |
| | | | US 2019394441 | A1 | 26-12-2019 |
| EP 3866104 | A1 | 18-08-2021 | EP 3866104 | A1 | 18-08-2021 |
| | | | WO 2021160476 | A1 | 19-08-2021 |

EPO FORM P0459

For more details about this annex : see Official Journal of the European Patent Office, No. 12/82